(19) Europäisches Patentamt
European Patent Office
Office européen des brevets

(11) **EP 4 752 956 A1**

(12) **EUROPEAN PATENT APPLICATION**

(43) Date of publication:
**03.06.2026 Bulletin 2026/23**

(21) Application number: **25219269.5**

(22) Date of filing: **28.11.2025**

(51) International Patent Classification (IPC):
**H01M 4/133** (2010.01)       **H01M 4/134** (2010.01)
**H01M 4/1393** (2010.01)       **H01M 4/1395** (2010.01)
**H01M 10/04** (2006.01)

(52) Cooperative Patent Classification (CPC):
**H01M 4/133; H01M 4/134; H01M 4/1393;
H01M 4/1395; H01M 10/0431;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 KR 20240174314**

(71) Applicant: **Samsung SDI Co., Ltd.**
**Yongin-si, Gyeongsangnam-do 17084 (KR)**

(72) Inventors:
 • **JUNG, Meenkyoung**
  **Yongin-si, Gyeonggi-do 17084 (KR)**

 • **DOO, JaeGyun**
  **Yongin-si, Gyeonggi-do 17084 (KR)**
 • **CHOI, Woosung**
  **Yongin-si, Gyeonggi-do 17084 (KR)**
 • **KIM, Haeju**
  **Yongin-si, Gyeonggi-do 17084 (KR)**
 • **BAK, Hyo-Rim**
  **Yongin-si, Gyeonggi-do 17084 (KR)**
 • **OH, Jungyeon**
  **Yongin-si, Gyeonggi-do 17084 (KR)**

(74) Representative: **Michalski Hüttermann & Partner**
**Patentanwälte mbB**
**KaiStraße 16A**
**40221 Düsseldorf (DE)**

(54) **NEGATIVE ELECTRODE FOR RECHARGEABLE LITHIUM BATTERY, ELECTRODE ASSEMBLY CONTAINING THE SAME, AND RECHARGEABLE LITHIUM BATTERY INCLUDING THE SAME**

(57)    The present disclosure relates to a negative electrode for a rechargeable lithium battery, and a rechargeable lithium battery including the negative electrode, and for example to a negative electrode including a negative electrode current collector, a first and second negative electrode active material layers stacked on a first surface of the negative electrode current collector, and a third and fourth negative electrode active material layers stacked on a second surface of the negative electrode current collector. A content of a carbon-based negative electrode active material in the first negative electrode active material layer is larger than the content in the second negative electrode active material layer. A content of the carbon-based negative electrode active material in the third negative electrode active material layer is smaller than the content in the fourth negative electrode active material layer.

FIG. 2

EP 4 752 956 A1

**Description**

CROSS-REFERENCE TO RELATED APPLICATIONS

This application claims priority of Korean Patent Application No. 10-2024-0174314, filed on November 29, 2024.

BACKGROUND

The present disclosure herein relates to a negative electrode for a rechargeable lithium battery, a jelly-roll type electrode assembly including the negative electrode, and a rechargeable lithium battery including the negative electrode, and more particularly, to a negative electrode for a rechargeable lithium battery in which a negative electrode active material layer is asymmetrically formed on both sides of a negative electrode current collector, a jelly-roll type electrode assembly including the negative electrode, and a rechargeable lithium battery including the negative electrode.

With increasing presence of battery-using electronic devices, such as, e.g., mobile phones, laptop computers, and electric vehicles, demand for a rechargeable battery with high energy density and high capacity has increased. Accordingly, improving the performance of a rechargeable lithium battery may be advantageous.

The rechargeable lithium battery includes a positive electrode and a negative electrode containing an active material capable of intercalation and deintercalation of lithium ions, and an electrolyte solution. Electrical energy is produced by oxidation and reduction reactions when the lithium ions are intercalated/deintercalated into/from the positive electrode and the negative electrode.

SUMMARY

The present disclosure describes a negative electrode for a rechargeable lithium battery, which has desired or improved rate characteristics, high capacity, and desired or improved lifespan characteristics

The present disclosure also describes a jelly-roll type electrode assembly having desired or improved rate characteristics, high capacity, and desired or improved lifespan characteristics.

An example embodiment of the present disclosure includes a negative electrode for a rechargeable lithium battery including a negative electrode current collector, a lower negative electrode active material layer on a first surface of the negative electrode current collector, and an upper negative electrode active material layer on a second surface of the negative electrode current collector. The lower negative electrode active material layer may include a first negative electrode active material layer and a second negative electrode active material layer which are stacked, e.g., sequentially stacked on the first surface of the negative electrode current collector. The upper negative electrode active material layer may include a third negative electrode active material layer and a fourth negative electrode active material layer which are stacked, e.g., sequentially stacked on the second surface of the negative electrode current collector. The first negative electrode active material layer and the fourth negative electrode active material layer may each include a carbon-based negative electrode active material. The second negative electrode active material layer and the third negative electrode active material layer may each include a carbon-based negative electrode active material, and a silicon-based negative electrode active material. A content of the carbon-based negative electrode active material in the first negative electrode active material layer is larger than a content of the carbon-based negative electrode active material in the second negative electrode active material layer. A content of the carbon-based negative electrode active material in the third negative electrode active material layer may be less than a content of the carbon-based negative electrode active material in the fourth negative electrode active material layer.

In an example embodiment of the present disclosure, a jelly-roll type electrode assembly includes a positive electrode, a negative electrode, and a separator between the positive electrode and the negative electrode.

In an example embodiment of the present disclosure, a jelly-roll type electrode assembly includes a positive electrode, a negative electrode, and a separator disposed between the positive electrode and the negative electrode. The negative electrode may include a negative electrode current collector, a lower negative electrode active material layer on a first surface of the negative electrode current collector, and an upper negative electrode active material layer on a second surface of the negative electrode current collector. Each of, or at least one of, the lower negative electrode active material layer and the upper negative electrode active material layer may include a carbon-based negative electrode active material and a silicon-based negative electrode active material. A content of the carbon-based negative electrode active material in the lower negative electrode active material layer may increase closer to the first surface, and a content of the carbon-based negative electrode active material in the upper negative electrode active material layer may decrease closer to the second surface.

In an example embodiment of the present disclosure, a rechargeable lithium battery includes the electrode assembly described above.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:

FIG. 1 is a simplified conceptual diagram illustrating a rechargeable lithium battery according to example embodiments of the present disclosure;

FIG. 2 to FIG. 5 are schematic views each illustrating a rechargeable lithium battery according to an example embodiment, wherein the rechargeable lithium battery in FIG. 2 may be in a cylindrical battery form, the rechargeable lithium battery in FIG. 3 may be in a prismatic battery form, and the rechargeable lithium batteries in FIG. 4 and FIG. 5 may be in a pouch-type battery form;

FIG. 6 and FIG. 7 are each a cross-sectional view illustrating a negative electrode according to an example embodiment of the present disclosure;

FIG. 8 is a cross-sectional view illustrating a jelly-roll type electrode assembly according to an example embodiment of the present disclosure; and

FIG. 9 is a cross-sectional view illustrating a negative electrode of a jelly-roll type electrode assembly according to an example embodiment of the present disclosure.

DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that when an element is referred to as being "on" another element, the element may be directly formed on the other element, or third elements may be disposed therebetween. In addition, in the drawings, the thickness of the elements may be exaggerated for effectively describing the technical contents. Like reference numerals refer to like elements throughout.

The singular forms are intended to include the plural forms as well, unless the context clearly indicates otherwise. In addition, unless otherwise specially noted, the phrase "A or B" may indicate "including A but not B, B but not A, or A and B." The terms "comprises" and/or "comprising" used in this description do not exclude the presence or addition of one or more other components.

As used herein, the term "combination thereof" may refer to a mixture, a stack, a composite, a copolymer, an alloy, a blend, or a reaction product of components.

As used herein, the phrases such as "A or B," "A and B," "at least one of A and B," "at least one of A or B," "A, B, or C," "at least one of A, B, and C," and "at least one of A, B, or C" may each include any one among the items listed together in the corresponding phrases among those phrases, or all possible combinations thereof.

Unless otherwise defined herein, a particle diameter may be an average particle diameter. In addition, the particle diameter is defined as an average particle diameter (D50) indicating a diameter of particles at a cumulative volume of $\geq 50$ vol% in particle size distribution. The average particle diameter (D50) may be measured by a method known to those skilled in the art, for example, using a particle size analyzer, or may also be measured using an image of transmission electron microscope (TEM), or an image of scanning electron microscope (SEM). Alternatively, the average particle diameter (D50) may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the measuring using the laser diffraction method, target particles are dispersed in a dispersion medium, introduced into a commercially available laser diffraction particle diameter measuring device (e.g., MT 3000 available from Microtrac, Ltd.), irradiated with ultrasonic waves of $\geq 28$ kHz at a power of $\geq 60$ W, and then an average particle diameter (D50) based on about 50% of the particle diameter distribution in the measuring device may be calculated.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

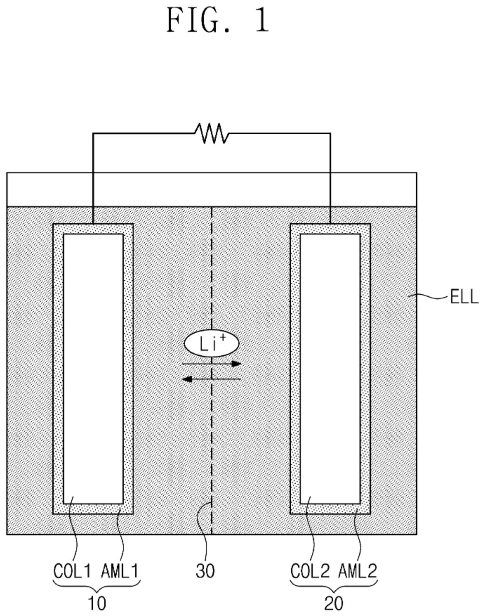

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode 10

The positive electrode 10 for a rechargeable lithium battery may include a current collector COL1, and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

An amount of the positive electrode active material may be in a range of $\geq 90$ wt% to $\leq 99.5$ wt% relative to 100 wt% of the positive electrode active material layer AML1. An amount of each of the binder and the conductive material may be in a range of $\geq 0.5$ wt% to $\leq 5$ wt% relative to 100 wt% of the positive electrode active material layer AML1.

The binder may be configured to improve attachment of positive electrode active material particles to each other, and to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause a chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing at least one or more of copper, nickel, aluminum, and silver; a conductive polymer such as a polyphenylene derivative; or a mixture thereof.

Aluminum (Al) may be used as the current collector COL1, but the present disclosure is not limited thereto.

## Positive Electrode Active Material

The positive electrode active material in the positive electrode active material layer AML1 may include a compound (e.g., a lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and $L^1$ may be or include at least one of Mn, Al, or a combination thereof.

For example, the positive electrode active material may be or include a high-nickel-based positive electrode active material having a nickel amount that is equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in lithium transition metal composite oxide. The high-nickel-based positive electrode active material may achieve high capacity and thus may be applied to a high-capacity and high-density rechargeable lithium battery.

## Negative Electrode 20

The negative electrode 20 for a rechargeable lithium battery may include a current collector COL2, and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of $\geq$ 90 wt% to $\leq$ 99 wt%, a binder of $\geq$ 0.5 wt% to $\leq$ 5 wt%, and a conductive material of $\geq$ 0 wt% to $\leq$ 5 wt%.

The binder may be configured to improve attachment of negative electrode active material particles to each other, and also to improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be included to provide an electrode with conductivity, and any suitable conductive material that does not cause a chemical change in a battery may be used as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where $0<x<2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite sides of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a linear carbonate may be mixed, and the cyclic carbonate and the linear carbonate may be mixed in a volume ratio in a range of $\geq$ 1:1 to $\leq$ 1:9.

The lithium salt may be or include a material that dissolves in the non-aqueous organic solvent to constitute a supply source of lithium ions in a battery, enables a basic operation of a rechargeable lithium battery, and promotes the movement of lithium ions between positive and negative electrodes. The lithium salt may include, for example, at least one

of LiPF$_6$, LiBF$_4$, LiSbF$_6$, LiAsF$_6$, LiClO$_4$, LiAlO$_2$, LiAlCl$_4$, LiPO$_2$F$_2$, LiCl, LiI, LiN(SO$_3$C$_2$F$_5$)$_2$, Li(FSO$_2$)$_2$N (lithium bis(fluor-osulfonyl)imide, LiFSI), LiC$_4$F$_9$SO$_3$, LiN(C$_x$F$_{2x+1}$SO$_2$)(C$_y$F$_{2y+1}$SO$_2$) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

## Rechargeable Lithium Battery

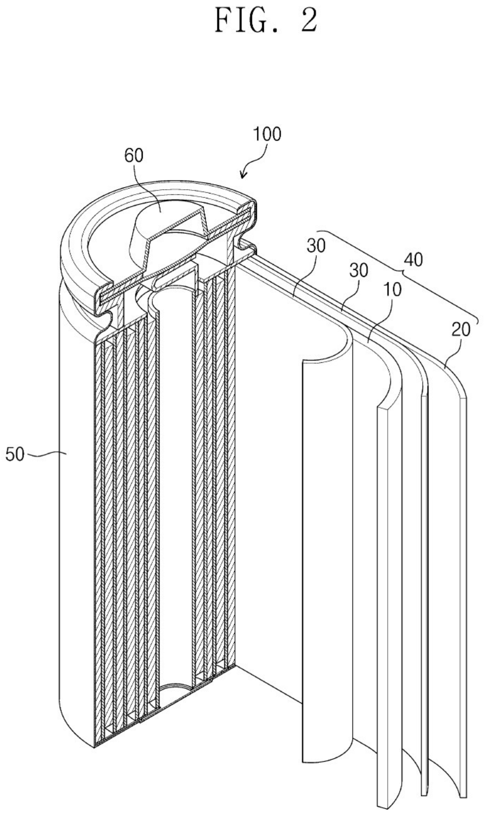

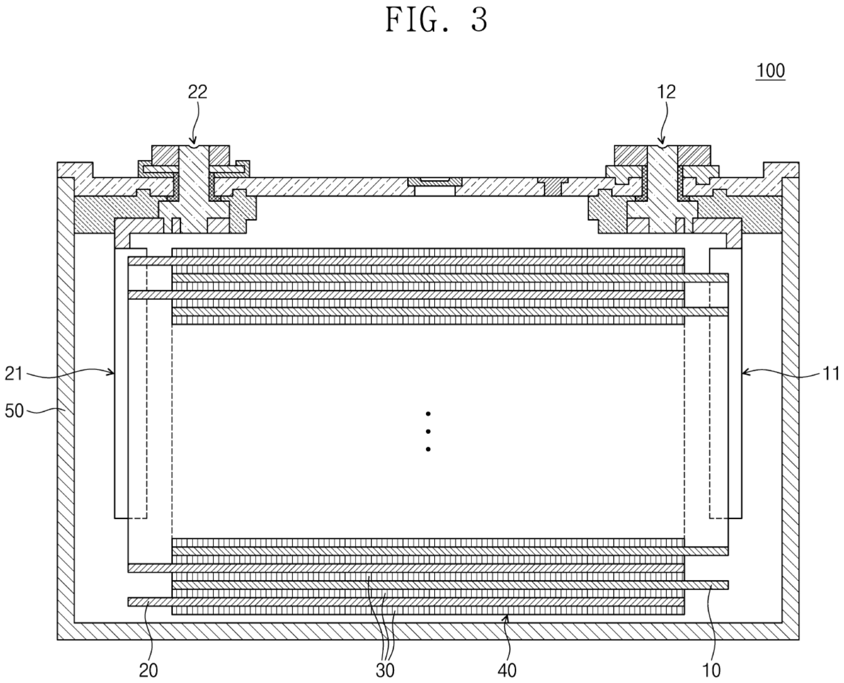

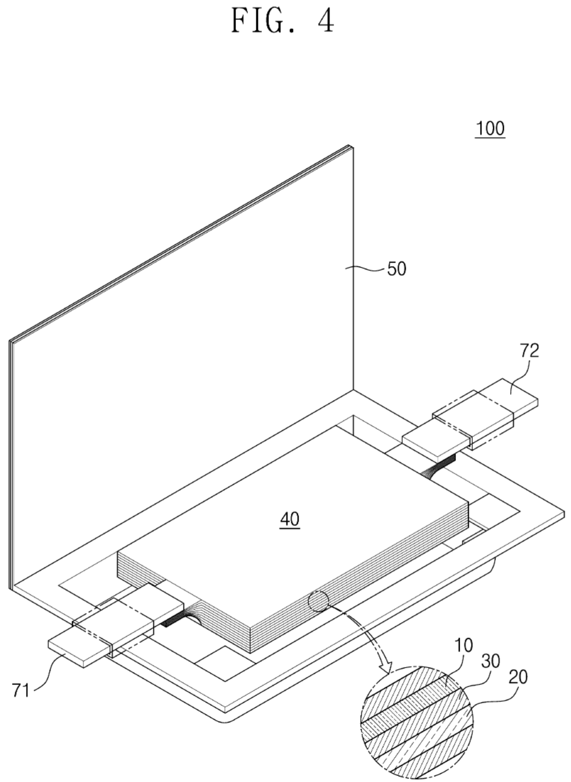

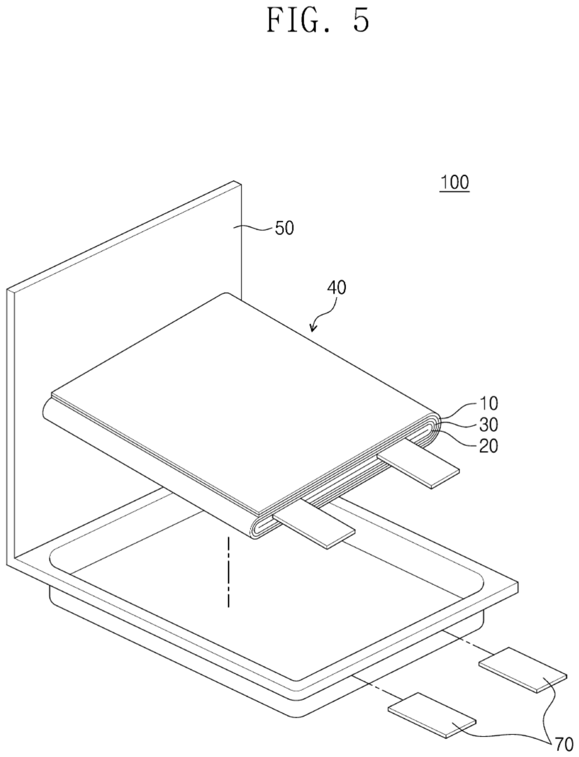

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, electrode tabs 70/71/72 forming an electrical path for externally inducing a current generated in the electrode assembly 40.

The following describes in detail a rechargeable lithium battery according to some example embodiments of the present disclosure and an electrode included therein.

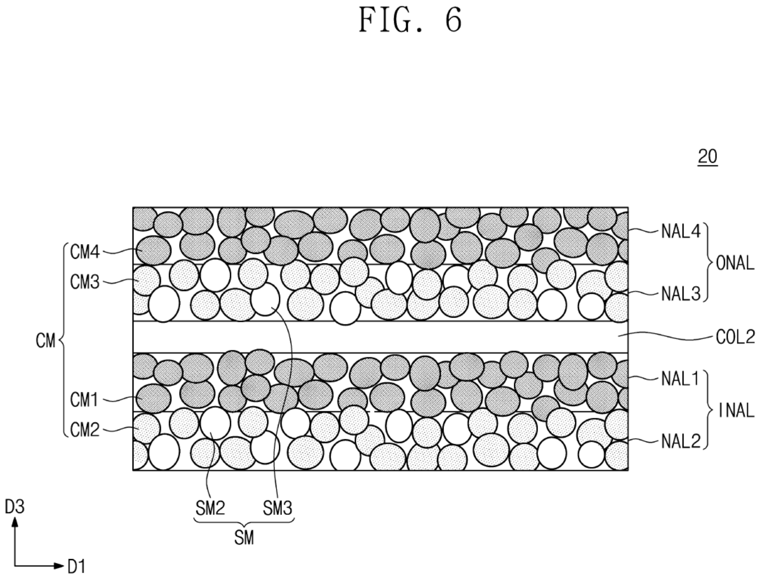

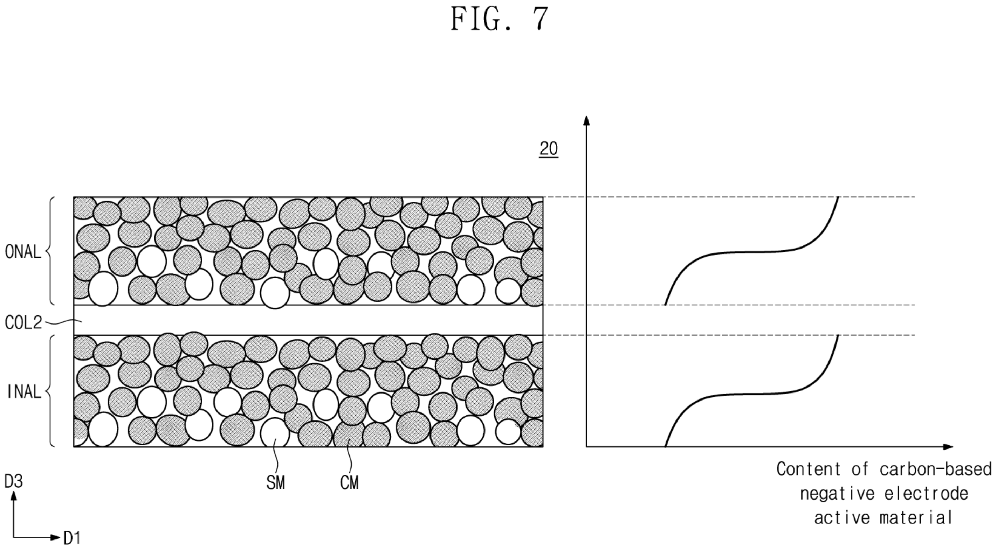

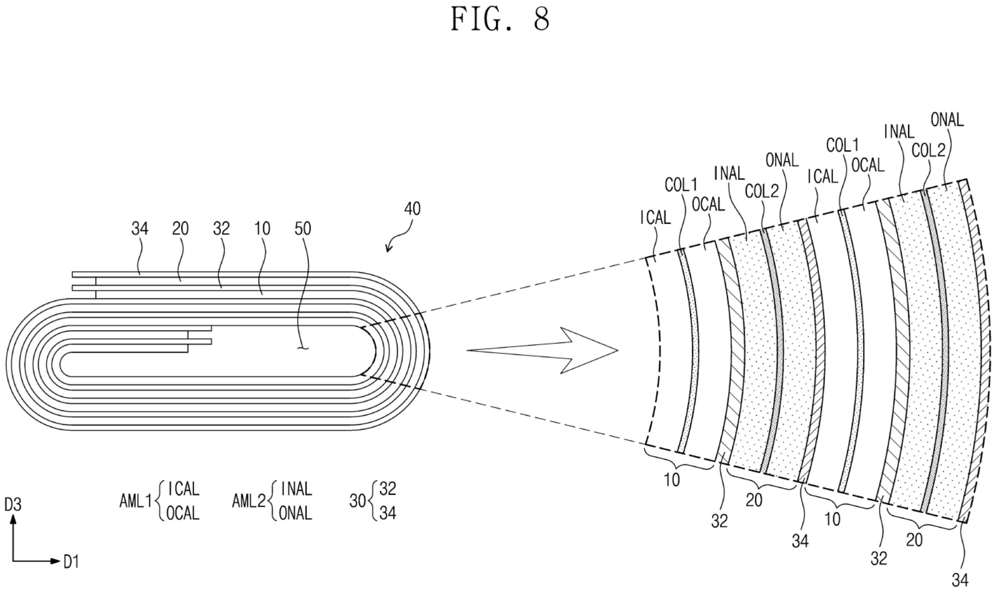

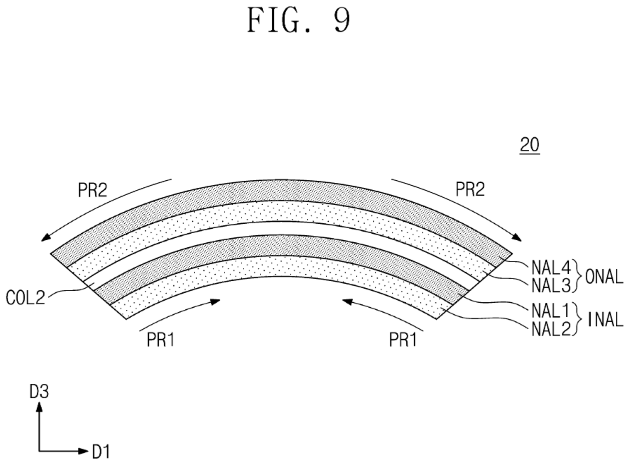

FIG. 6 and FIG. 7 are each a cross-sectional view of a negative electrode 20 according to an example embodiment of the present disclosure. FIG. 8 is a cross-sectional view of a jelly-roll type electrode assembly 40 according to an example embodiment of the present disclosure. FIG. 9 is a cross-sectional view illustrating a portion of the negative electrode 20 included in a jelly-roll type electrode, assembly according to an example embodiment of the present disclosure. Hereinafter, with reference to FIG. 6 to FIG. 9, the negative electrode 20 according to example embodiments of the present disclosure, the jelly-roll type electrode assembly 40 including the negative electrode 20, and the rechargeable lithium battery including the negative electrode 20 are described in detail.

Referring to FIG. 6, the negative electrode 20 according to example embodiments of the present disclosure for a rechargeable lithium battery may include a negative electrode current collector COL2, a lower negative electrode active material layer INAL on a first surface of the negative electrode current collector COL2, and an upper negative electrode active material layer ONAL on a second surface of the negative electrode current collector COL2. The lower negative electrode active material layer INAL may include a first negative electrode active material layer NAL1 and a second negative electrode active material layer NAL2. The upper negative electrode active material layer ONAL may include a third negative electrode active material layer NAL3 and a fourth negative electrode active material layer NAL4.

A thickness ratio of the lower negative electrode active material layer INAL to the upper negative electrode active material layer ONAL may be in a range of ≥ 1:2 to ≤ 2:1. A thickness ratio of the first negative electrode active material layer NAL1 to the second negative electrode active material layer NAL2 may be in a range of ≥ 1:2 to ≤ 2:1, and a thickness ratio of the third negative electrode active material layer NAL3 to the fourth negative electrode active material layer NAL4 may be in a range of ≥ 1:2 to ≤ 2:1. In an example embodiment, all of the thickness ratio of the lower negative electrode active material layer INAL to the upper negative electrode active material layer ONAL, the thickness ratio of the first negative electrode active material layer NAL1 to the second negative electrode active material layer NAL2, and the thickness ratio of the third negative electrode active material layer NAL2 to the fourth negative electrode active material layer NAL4 may be in a range of ≥ 1:1.

The negative electrode 20 according to example embodiments according to the present disclosure may improve rate characteristics and lifespan characteristics of the negative electrode 20 by asymmetrically forming the negative electrode active material layers on the first surface and the second surface which are facing each other. Hereinafter, each of the lower negative electrode active material layer INAL and the upper negative electrode active material layer ONAL is described in more detail.

## Lower negative electrode active material layer (INAL)

According to an example embodiment of the present disclosure, the lower negative electrode active material layer INAL may include a first negative electrode active material layer NAL1 and a second negative electrode active material layer NAL2 which are stacked, e.g., sequentially stacked, on the first surface of the negative electrode current collector COL2, For example, the first negative electrode active material layer NAL1 may be in contact with the first surface of the negative electrode current collector COL2, and the second negative electrode active material layer NAL2 may be spaced apart from the negative electrode current collector COL2. The first negative electrode active material layer NAL1 may include a carbon-based negative electrode active material CM1. The second negative electrode active material layer NAL2 may include a carbon-based negative electrode active material CM2 and a silicon-based negative electrode active material SM2.

The carbon-based negative electrode active material CM may include, for example, crystalline carbon, amorphous carbon, or a combination thereof. Examples of the crystalline carbon may include graphite such as amorphous, platelike, flake-like, spherical, or fiber-like natural graphite or artificial graphite, and examples of the amorphous carbon may include at least one of soft carbon or hard carbon, mesophase pitch carbide, calcined coke and the like. The carbon-based negative electrode active material CM1 included in the first negative electrode active material layer NAL1 may be the same as, or different from, the carbon-based negative electrode active material CM2 included in the second negative electrode active material layer NAL2.

The Si-based negative electrode active material SM may be or include at least one of silicon, a silicon-carbon composite, SiOx (0<x≤2), a Si-Q alloy (where Q is or includes at least one of an alkali metal, an alkaline earth metal, a Group 13 element, a Group 14 element (excluding Si), a Group 15 element, a Group 16 element, a transition metal, a rare earth element, and a combination thereof), or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, a secondary particle (core), in which silicon primary particles are assembled, and a first amorphous carbon coating layer (shell), which is positioned on the surface of the secondary particle, may be included. The amorphous carbon may also be present between the silicon primary particles, and thus the silicon primary particles, for example, may be applied with amorphous carbon. The secondary particle may be dispersed in an amorphous carbon matrix.

**First negative electrode active material layer:**

A content of the carbon-based negative electrode active material CM1 in the first negative electrode active material layer NAL1 may be larger than the carbon-based negative electrode active material CM2 in the second negative electrode active material layer NAL2. For example, the carbon-based negative electrode active material CM1 in the first negative electrode active material layer NAL1 may be in a range of ≥ 90 wt% to ≤ 99wt%, ≥95 wt% to ≤ 99 wt%, or ≥96 wt% to ≤ 98 wt% on the basis of the first negative electrode active material layer NAL1 100 wt%.

Although not illustrated, the first negative electrode active material layer NAL1 may further contain a silicon-based negative electrode active material in addition to the carbon-based negative electrode active material CM1. In this case, the silicon-based negative electrode active material in the first negative electrode active material layer NAL1 may be the same as or similar to the silicon-based negative electrode active material SM2 in the second negative electrode active material layer NAL2.

The silicon-based negative electrode active material content in the first negative electrode active material layer NAL1 may be smaller than the silicon-based negative electrode active material SM2 content in the second negative electrode active material layer NAL2. The content of the silicon-based negative electrode active material in the first negative electrode active material layer NAL1 may be in a range of ≥ 5 wt% or less on the basis of the first negative electrode active material layer NAL1 100 wt%. For example, the content of the silicon-based negative electrode active material may be in a range of ≥ 0 wt% to ≤ 5 wt%, or ≥0 wt% to ≤ 2 wt%.

That is, the first negative electrode active material layer NAL1 may include a small amount of the silicon-based negative electrode active material, or may not include silicon-based negative electrode active material. Since the first negative electrode active material layer NAL1 includes the silicon-based negative electrode active material in an amount in a range of ≥ 5 wt% or less, changes in volume due to charging and discharging may be small, and lifespan characteristics may be desired or improved.

The first negative electrode active material layer NAL1 may further include a conductive material. The conductive material may provide conductivity to an electrode, and any electronically conductive material that does not cause a chemical change in the battery may be included. The conductive material may be or include, for example, a carbon-based material, a metal-based material, a conductive polymer, or a combination thereof.

In an example embodiment, a conductive material in the first negative electrode active material layer NAL1 may include a carbon-based material. The conductive material may include, for example, at least one of graphite, carbon black, acetylene black, carbon nanofibers, or carbon nanotubes,

A content of the conductive material in the first negative electrode active material layer NAL1 may be in a range of ≥ 0.1 wt% to ≤ 10 wt%, ≥0.2 wt% to ≤ 7 wt%, or ≥ 0.5 wt% to ≤ 5 wt%, with respect to 100 wt% of the first negative electrode active material layer NAL1.

The first negative electrode active material layer NAL1 may further include a binder in addition to the negative electrode active material and the conductive material. The binder may attach the negative electrode active material particles to each other, and also contributes to attaching the negative electrode active material to the current collector COL2. A non-aqueous binder, an aqueous binder, a dry binder, or a combination thereof may be used as the binder. A binder content in the first negative electrode active material layer NAL1 may be in a range of $\geq 0$ wt% to $\leq 10$ wt%, $\geq 0.3$ wt% to $\leq 7$ wt%, or $\geq 0.5$ wt% to $\leq 5$ wt% on the basis of 100 wt% of the first negative electrode active material layer NAL1.

The non-aqueous binder may include, for example, at least one of polyvinyl chloride, carboxylate polyvinyl chloride, polyvinyl fluoride, an ethylene propylene copolymer, polystyrene, polyurethane, polytetrafluoroethylene, polyvinylidene fluoride, or a combination thereof.

The aqueous binder may include, for example, at least one of a styrene-butadiene rubber, a (meth)acrylated styrene-butadiene rubber, a (meth)acrylonitrile-butadiene rubber, a (meth)acrylic rubber, a butyl rubber, poly(meth) acrylonitrile, an ethylene propylene diene copolymer, polyvinylpyridine, a (meth)acrylic resin, or a combination thereof. When the aqueous binder is used as the negative electrode binder, a cellulose series compound capable of imparting viscosity may be further included.

The dry binder may be or include a polymer material capable of fiberization, for example, at least one of polytetrafluoroethylene, polyvinylidene fluoride, a polyvinylidene fluoride-hexafluoropropylene copolymer, polyethylene oxide, or a combination thereof.

**Second negative electrode active material layer:**

A content of the carbon-based negative electrode active material CM2 in the second negative electrode active material layer NAL2 may be less than the content of the carbon-based negative electrode active material CM1 in the first negative electrode active material layer NAL1. A content of the silicon-based negative electrode active material SM2 in the second negative electrode active material layer NAL2 may be larger than the content of the silicon-based negative electrode active material in the first negative electrode active material layer NAL1.

A weight ratio of the carbon-based negative electrode active material CM2 to the silicon-based negative electrode active material SM2 in the second negative electrode active material layer NAL2 may be in a range of $\geq$ 60:40 to $\leq$ 99:1, $\geq$ 70:30 to $\leq$ 98:2, or $\geq$ 80:20 to $\leq$ 98:2.

When the content of the silicon-based negative electrode active material SM2 in the second negative electrode active material layer NAL2 is too small, capacity of the negative electrode may decrease, and N/P reversal phenomenon may occur. When the silicon-based negative electrode active material SM2 in the second negative electrode active material layer NAL2 is too large, a volume of the negative electrode active material layer, during charging and discharging, significantly changes, and thus lifespan characteristics of the negative electrode 20 may deteriorate. When the weight ratio of the carbon-based negative electrode active material CM2 and the silicon-based negative electrode active material SM2 in the second negative electrode active material layer NAL2 falls within the above-described range, the negative electrode 20 may have sufficient capacity and exhibit desired or improved lifespan characteristics.

The second negative electrode active material layer NAL2 may further include a conductive material. The conductive material may be or include, for example, a carbon-based material, a metal-based material, a conductive polymer, or a combination thereof. A conductive material content in the second negative electrode active material layer NAL2 may be in a range of $\geq 0.1$ wt% to $\leq 10$ wt%, $\geq 0.3$ wt% to $\leq 7$ wt%, or $\geq 0.5$ wt% to $\leq 5$ wt% on the basis of the total weight of the second negative electrode active material layer NAL2.

In an example embodiment, the second negative electrode active material layer NAL2 may include a needle type carbon-based conductive material. The needle type carbon-based conductive material has a needle-like particle shape, and for example, may have an aspect ratio (length/diameter) in a range of $\geq 10$ or greater. An aspect ratio of the needle type carbon-based conductive material may be, for example, in a range of $\geq 20$ to $\leq 700$, $\geq 50$ to $\leq 600$, $\geq 60$ to $\leq 300$ or $\geq 100$ to $\leq$ 300. For example, the needle type carbon-based conductive material may include at least one of carbon nanotube (CNT), a vapor-grown carbon fiber (VGCF), a carbon nanofiber (CNF), or a combination thereof.

When the second negative electrode active material layer NAL2 includes the needle type carbon-based conductive material, conductivity of the second negative electrode active material layer NAL2 may be improved, and the expansion in volume may be mitigated. The second negative electrode active material layer NAL2 includes a silicon-based negative electrode active material SM2 having low conductivity and a large volume change during charging and discharging. The needle type carbon-based conductive material may rapidly transfer electrons due to a needle shaped structure, and thus may significantly improve conductivity of the negative electrode active material layer using only a small amount of conductive material. In addition, the needle type carbon-based conductive material may stabilize a structure of the silicon particle, and improve the lifespan of the negative electrode by physically compensating for an expansion of the silicon particle.

The second negative electrode active material layer NAL2 may further include a binder in addition to the negative electrode active material and the conductive material. The binder may be the same as, or similar to, the binder included in the first negative electrode active material layer NAL1. For example, the binder may include an aqueous binder such as at least one of a styrene-butadiene rubber, a (meth)acrylated styrene-butadiene rubber, a (meth)acrylonitrile-butadiene rubber, and a (meth)acrylic rubber, and may further include a cellulose series compound that may impart viscosity.

**Upper negative electrode active material layer ONAL**

According to an example embodiment of the present disclosure, the upper negative electrode active material layer ONAL may include a third negative electrode active material layer NAL3 and a fourth negative electrode active material layer NAL4, which are stacked, e.g., sequentially stacked, on the second surface of the negative electrode current collector COL2. For example, the third negative electrode active material layer NAL3 may be in contact with the second surface of the negative electrode current collector COL2, and the fourth negative electrode active material layer NAL4 may be spaced apart from the negative electrode current collector COL2. The third negative electrode active material layer NAL3 may include a carbon-based negative electrode active material CM3. The fourth negative electrode active material layer NAL4 may include a carbon-based negative electrode active material CM4 and a silicon-based negative electrode active material SM4.

The carbon-based negative electrode active material CM included in the upper negative electrode active material layer ONAL may be the same as or similar to the carbon-based negative electrode active material CM included in the lower negative electrode active material layer INAL. For example, the carbon-based negative electrode active material CM may include crystalline carbon, amorphous carbon, or a combination thereof. The silicon-based negative electrode active material SM included in the upper negative electrode active material layer ONAL may be the same as, or similar to, the silicon-based negative electrode active material SM included in the lower negative electrode active material layer INAL. For example, the silicon-based negative electrode active material SM may include at least one of silicon, a silicon-carbon composite, $SiO_x$ ($0 < x \leq 2$), or a combination thereof.

**Third negative electrode active material layer:**

The third negative electrode active material layer NAL3 may have compositions that are the same as or similar to the compositions of the second negative electrode active material layer NAL2. A weight ratio of a carbon-based negative electrode active material CM3 to the silicon-based negative electrode active material SM3 in the third negative electrode active material layer NAL3 may be in a range of $\geq 60{:}40$ to $\leq 99{:}1$, $\geq 70{:}30$ to $\leq 98{:}2$, or $\geq 80{:}20$ to $\leq 98{:}2$.

The third negative electrode active material layer NAL3 may further include a conductive material. The conductive material may be the same as, or similar to, the conductive material included in the second negative electrode active material layer NAL2. A content of the conductive material in the third negative electrode active material layer NAL3 may be in a range of $\geq 0.1$ wt% to $\leq 10$ wt%, $\geq 0.3$ wt% to $\leq 7$ wt%, or $\geq 0.5$ wt% to $\leq 5$ wt% on the basis of the total weight of the third negative electrode active material layer NAL3.

The third negative electrode active material layer NAL3 may further include a binder in addition to the negative electrode active material and the conductive material. The binder may be the same as or similar to the binder included in the second negative electrode active material layer NAL2. For example, the binder may include an aqueous binder such as at least one of a styrene-butadiene rubber, a (meth)acrylated styrene-butadiene rubber, a (meth)acrylonitrile-butadiene rubber, and a (meth)acrylic rubber, and may further include a cellulose series compound that may impart viscosity.

**Fourth negative electrode active material layer:**

A content of a carbon-based negative electrode active material CM4 in the fourth negative electrode active material layer NAL4 may be larger than the content of the carbon-based negative electrode active material CM3 in the third negative electrode active material layer NAL3. For example, the content of the carbon-based negative electrode active material CM4 in the fourth negative electrode active material layer NAL4 may be in a range of $\geq 90$ wt% to $\leq 99$ wt%, $\geq 95$ wt% to $\leq 99$ wt%, or $\geq 96$ wt% to $\leq 98$ wt%.

Although not illustrated, the fourth negative electrode active material layer NAL4 may further include a silicon-based negative electrode active material in addition to the carbon-based negative electrode active material CM4. A content of the silicon-based negative electrode active material in the fourth negative electrode active material layer NAL4 may be in a range of $\geq 5$ wt% or less on the basis of the total weight of the fourth negative electrode active material layer NAL4. For example, the content of the silicon-based negative electrode active material may be in a range of $\geq 0$ wt% to $\leq 5$ wt%, or $\geq 0$ wt% to $\leq 2$ wt%.

The fourth negative electrode active material layer NAL4 may further include a conductive material. The conductive material may be the same as or similar to the conductive material included in the first negative electrode active material layer NAL1. For example, the conductive material may include a carbon-based material. The conductive material may include, for example, at least one of graphite, carbon black, acetylene black, carbon nanofibers, or carbon nanotubes.

The fourth negative electrode active material layer NAL4 may further include a binder in addition to the negative electrode active material and the conductive material. The binder may be the same as or similar to the binder included in the first negative electrode active material layer NAL1. For example, the binder may include an aqueous binder such as at least one of a styrene-butadiene rubber, a (meth)acrylated styrene-butadiene rubber, a (meth)acrylonitrile-butadiene rubber, and a (meth)acrylic rubber, and may further include a cellulose series compound that may impart viscosity.

Referring to FIG. 7, a negative electrode for a rechargeable lithium battery according to another example embodiment of the present disclosure may include a negative electrode current collector COL2, a lower negative electrode active material layer INAL on a first surface of the negative electrode current collector, and an upper negative electrode active material layer ONAL on a second surface of the negative electrode current collector. Each of, or at least one of, the lower negative electrode active material layer INAL and the upper negative electrode active material layer ONAL may include a carbon-based negative electrode active material CM and a silicon-based negative electrode active material SM, a content of the carbon-based negative electrode active material CM in the lower negative electrode active material layer INAL may increase closer to the first surface, and a content of the carbon-based negative electrode active material CM in the upper negative electrode active material layer ONAL may decrease closer to the second surface.

A content of the silicon-based negative electrode active material SM in the lower negative electrode active material layer INAL may decrease closer to the first surface of the negative electrode current collector COL2. A content of the silicon-based negative electrode active material SM in the upper negative electrode active material layer ONAL may increase closer to the second surface. That is, the upper negative electrode active material layer ONAL may exhibit an opposite content profile of the negative electrode active material to the profile of the lower negative electrode active material layer INAL.

According to an example embodiment of the present disclosure, the lower negative electrode active material layer INAL includes first to third regions which are vertically provided on the first surface of the negative electrode current collector COL2, wherein the first region is located closer to the negative electrode current collector COL2 than the second and third regions, the second region is located closer to the negative electrode current collector COL2 than the third region, and the content of the carbon-based negative electrode active material may increase from the third region toward the first region. The content of silicon-based negative electrode active material may decrease from the third region toward the first region.

The first region may be, for example, an adjacent region to the first surface of the negative electrode current collector COL2. The content of the carbon-based negative electrode active material CM in the first region may be larger than the content of the carbon-based negative electrode active material CM within the second and third regions. For example, the content of the carbon-based negative electrode active material CM in the first region may be in a range of $\geq 90$ wt% to $\leq 99$ wt%, $\geq 95$ wt% to $\leq 99$ wt%, or $\geq 96$ wt% to $\leq 98$ wt%. The content of the silicon-based negative electrode active material SM in the first region may be less than the content of the silicon-based negative electrode active material SM in the second and third regions. For example, the content of the silicon-based negative electrode active material SM in the first region may be in a range of $\geq 0$ wt% to $\leq 5$ wt%, or $\geq 0$ wt% to $\leq 2$ wt%.

The second region may be disposed between the first region and the third region. For example, the second region may be located at a center of the lower negative electrode active material layer INAL. The content of the carbon-based negative electrode active material CM in the second region may be less than the content of the carbon-based negative electrode active material CM in the first region, and may be larger than the content of the carbon-based negative electrode active material CM in the third region. The content of the silicon-based negative electrode active material SM in the second region may be larger than the content of the silicon-based negative electrode active material SM in the first region, and may be less than the content of the silicon-based negative electrode active material SM in the third region.

The third region may be, for example, an adjacent region to a top surface of the lower negative electrode active material layer INAL, that is, an interface between the lower negative electrode active material layer INAL and a separator 30. The content of the carbon-based negative electrode active material CM in the third region may be less than the content of the carbon-based negative electrode active material CM in the first and second regions. The content of the silicon-based negative electrode active material SM in the third region may be larger than the content of the silicon-based negative electrode active material SM in the first and second regions. A weight ratio of the carbon-based negative electrode active material CM to the silicon-based negative electrode active material SM in the third region may be in a range of $\geq 60:40$ to $\leq 99:1$, $\geq 70:30$ to $\leq 98:2$, or $\geq 80:20$ to $\leq 98:2$.

The third region may include, as a conductive material, a needle type carbon-based conductive material such as or including at least one of carbon nanotube (CNT), a vapor-grown carbon fiber (VGCF), and a carbon nanofiber (CNF). The needle type carbon-based conductive material may physically compensate for a volume change of the silicon-based negative electrode active material included in the third region, thereby improving the lifespan of the negative electrode.

The content of the conductive material in the lower negative electrode active material layer INAL may be in a range of $\geq 0.1$ wt% to $\leq 10$ wt%, $\geq 0.3$ wt% to $\leq 7$ wt%, or $\geq 0.5$ wt% to $\leq 5$ wt% on the basis of the total weight of the lower negative electrode active material layer INAL.

According to an example embodiment of the present disclosure, the upper negative electrode active material layer ONAL includes fourth to sixth regions vertically provided on the second surface of the negative electrode current collector COL2, wherein the fourth region is located closer to the negative electrode current collector COL2 than the fifth and sixth regions, the fifth region is located closer to the negative electrode current collector COL2 than the sixth region, and the content of the carbon-bated negative electrode active material CM may decrease from the sixth region toward the fourth region. The content of the silicon-based negative electrode active material SM may increase from the sixth region toward the fourth region.

The fourth region may be, for example, an adjacent region to the second surface of the negative electrode current collector COL2. The content of the carbon-based negative electrode active material CM in the fourth region may be less than the content of the carbon-based negative electrode active material CM in the fifth and sixth regions. The content of the silicon-based negative electrode active material SM in the fourth region may be larger than the content of the silicon-based negative electrode active material SM in the fifth and sixth regions. A weight ratio of the carbon-based negative electrode active material CM to the silicon-based negative electrode active material SM in the fourth region may be in a range of $\geq$ 60:40 to $\leq$ 99:1, $\geq$70:30 to $\leq$ 98 : 2, or $\geq$80:20 to $\leq$ 98:2.

The fourth region may include a needle type carbon-based conductive material such as at least one of a carbon nanotube (CNT), a vapor-grown carbon fiber (VGCF), and a carbon nanofiber (CNF). The needle type carbon-based conductive material physically compensates for a volume change of the silicon-based negative electrode active material included in the fourth region, and thus the lifespan of the negative electrode may be improved.

The fifth region may be disposed between the fourth region and the sixth region. For example, the fifth region may be located at a center of the upper negative electrode active material layer ONAL. The content of the carbon-based negative electrode active material CM in the fifth region may be larger than the content of the carbon-based negative electrode active material CM in the fourth region and may be less than the content of the carbon-based negative electrode active material CM in the sixth region. The content of the silicon-based negative electrode active material SM in the fifth region may be less than the content of the silicon-based negative electrode active material SM in the fourth region and may be larger than the content of the silicon-based negative electrode active material SM in the sixth region.

The sixth region may be, for example, an adjacent region to a top surface of the upper negative electrode active material layer ONAL, that is, an interface between the upper negative electrode active material layer ONAL and the separator 30. The content of the carbon-based negative electrode active material CM in the sixth region may be larger than the content of the carbon-based negative electrode active material CM in the fourth and fifth regions. For example, the content of the carbon-based negative electrode active material CM in the sixth region may be in a range of $\geq$ 90 wt% to $\leq$ 99 wt%, $\geq$ 95 wt% to $\leq$ 99 wt%, or $\geq$ 96 wt% to $\leq$ 98wt%.

The content of the silicon-based negative electrode active material SM in the sixth region may be less than the content of the silicon-based negative electrode active material SM in the fourth and fifth regions. For example, the content of the silicon-based negative electrode active material SM in the sixth region may be in a range of $\geq$ 0 wt% to $\leq$ 5wt%, or $\geq$ 0 wt% to $\leq$ 2wt%.

The content of the conductive material in the upper negative electrode active material layer ONAL may be in a range of $\geq$ 0.1 wt% to $\leq$ 10 wt%, $\geq$ 0.3 wt% to $\leq$ 7 wt%, or $\geq$ 0.5 wt% to $\leq$ 5 wt% on the basis of the total weight of the upper negative electrode active material layer ONAL.

**Electrode assembly**

Referring to FIG. 8, an electrode assembly according to example embodiments of the present disclosure may be a jelly-roll type electrode assembly 40. The jelly-roll type electrode assembly 40 may be an electrolyte assembly in which a sheet-type negative electrode 20, a sheet-type positive electrode 10, and a sheet-type separator 30 are wound in a spiral shape. For example, the jelly-roll type electrode assembly may include a sheet-type negative electrode 20 in which negative electrode active material layers are supported on both sides of the negative electrode current collector, a sheet-type positive electrode 10 in which the positive electrode active material layers are supported on both sides of the positive electrode current collector, and sheet-type separators 32 and 34 which are disposed between the positive electrode and the negative electrode.

The sheet-type negative electrode 20 may be the negative electrode described above with reference to FIG 6, and FIG. 7. That is, the sheet-type negative electrode 20 may include a negative electrode current collector COL2, a lower negative electrode active material layer INAL on a first surface of the negative electrode current collector COL2, and an upper negative electrode active material layer ONAL on a second surface of the negative electrode current collector COL2.

The sheet-type positive electrode 10 may include a positive electrode current collector COL1, a lower positive electrode active material layer ICAL on a first surface of the positive electrode current collector COL1, and an upper positive electrode active material layer OCAL on a second surface of the positive electrode current collector COL1.

The jelly-roll type electrode assembly 40 may have a structure in which the second separator 34 is on an exterior surface of the upper negative electrode active material layer ONAL, and a unit structure in which the lower positive electrode active material layer ICAL/ positive electrode current collector COL1/ upper positive electrode active material layer OCAL/ first separator 32/ lower negative electrode active material layer INAL/ negative electrode current collector COL2/ upper negative electrode active material layer ONAL/ second separator 34 are stacked, e.g., sequentially stacked, is wound such that the lower positive electrode active material layer ICAL and the lower negative electrode active material layer INAL are directed toward the winding center 50.

In the jelly-roll type electrode assembly 40, the upper positive electrode active material layer OCAL may be located to be spaced further apart from the winding center 50 of the electrode assembly, as compared to the lower positive electrode active material layer ICAL. In an example embodiment, a thickness of the upper positive electrode active material layer OCAL may be the same as or larger than a thickness of the lower positive electrode active material layer ICAL. For example, a thickness ratio of the upper positive electrode active material layer OCAL to the lower positive electrode active material layer ICAL may be in a range of $\geq 1$ to $\leq 4$, $\geq 1$ to $\leq 3$, or $\geq 1.1$ to $\leq 2.5$.

In the wound electrode assembly 40, the upper negative electrode active material layer ONAL may be located to be spaced further apart from the winding center 50 of the electrode assembly, as compared to the lower negative electrode active material layer INAL. In an example embodiment, a thickness of the upper negative electrode active material ONAL may be the same as or similar to a thickness of the lower negative electrode active material layer INAL. For example, a thickness ratio of the upper negative electrode active material layer ONAL to the lower negative electrode active material layer INAL may be in a range of $\geq 1:2$ to $\leq 2:1$. For example, a thickness ratio of the upper negative electrode active material layer ONAL to the lower negative electrode active material layer INAL may be about 1:1.

Referring to FIG. 9, in the negative electrode 20 according to an example embodiment, the first negative electrode active material layer NAL1 may be located to be spaced further apart from the winding center 50, as compared to the second negative electrode active material layer NAL2, and the fourth negative electrode active material layer NAL4 may be located to be spaced further apart from the winding center 50, as compared to the third negative electrode active material layer NAL3. That is, in order to closeness to the winding center 50, the negative electrode 20 includes: the second negative electrode active material layer NAL2, the first negative electrode active material layer NAL1, the negative electrode current collector COL2, the third negative electrode active material layer NAL3, and the fourth negative electrode active material layer NAL4.

The second negative electrode active material layer NAL2, which is the closest to the winding center 50, may include a carbon-based negative electrode active material and a silicon-based negative electrode active material as a negative electrode active material. A weight ratio of the carbon-based negative electrode active material and the silicon-based negative electrode active material in the second negative electrode active material layer NAL2 may be in a range of $\geq 60:40$ to $\leq 99:1, \geq 70:30$ to $\leq 98:2$, or $\geq 80:20$ to $\leq 98:2$.

The second negative electrode active material layer NAL2 and the upper positive electrode active material layer OCAL may be disposed facing each other with a first separator 32 therebetween, thereby contributing to a reaction during charging and discharging of the battery before the first negative electrode active material layer NAL1. When the second negative electrode active material layer NAL2 includes a given amount of the silicon-based negative electrode active material having desired or improved capacity and good reactivity with lithium ions, capacity of the negative electrode may increase, and high-rate characteristics thereof may be improved.

The silicon-based negative electrode active material has limitations in that a volume change during charging and discharging accelerates degradation of the negative electrode. Since the second negative electrode active material layer NAL2 is applied by strong compressive stress PR1, as compared to the first, third and fourth negative electrode active material layers NAL1, NAL3, and NAL4, the volume change during charging and discharging may be reduced or suppressed even though a given amount of the silicon-based negative electrode active material is included, thereby reducing or preventing the degradation of lifespan.

The second negative electrode active material layer NAL2 may further include a conductive material in addition to the negative electrode active material. In an example embodiment, the conductive material may include a needle type carbon-based conductive material. For example, the needle type carbon-based conductive material may include at least one of carbon nanotube (CNT), a vapor-grown carbon fiber (VGCF), a carbon nanofiber (CNF), or a combination thereof. The needle type carbon-based conductive material may physically compensate for the expansion of the silicon particle, and thus a structure of the silicon particle may be stabilized, and conductivity of the negative electrode may be improved.

The first negative electrode active material layer NAL1 may include a carbon-based negative electrode active material as a negative electrode active material. A content of the carbon-based negative electrode active material in the first negative electrode active material layer NAL1 may be larger than a content of the carbon-based negative electrode active material in the second negative electrode active material layer NAL2. The content of the carbon-based negative electrode active material in the first negative electrode active material layer NAL1 may be about 90 wt% on the basis of the total weight of the first negative electrode active material layer NAL1. The first negative electrode active material layer NAL1 may further include a silicon-based negative electrode active material, wherein the content of the silicon-based negative electrode active material in the first negative electrode active material layer NAL1 may be about 2 wt% or less.

The first negative electrode active material layer NAL1 does not include a silicon-based negative electrode active material, or includes only a small amount of silicon-based negative electrode active material, and includes a large amount of carbon-based negative electrode active material that is structurally stable and highly reversible, and thus may contribute to the improvement of the lifespan of the negative electrode 20.

A thickness ratio of the first negative electrode active material layer NAL1 and the second negative electrode active material layer NAL2 may be in a range of $\geq$ 1:2 to $\leq$ 2:1. When the thickness ratio of the first negative electrode active material layer NAL1 and the second negative electrode active material layer NAL2 falls within the above-described range, the negative electrode may have desired or improved rate characteristics and desired or improved lifespan characteristics.

The third negative electrode active material layer NAL3 may have similar compositions to the second negative electrode active material layer NAL2. A weight ratio of the carbon-based negative electrode active material and the silicon-based negative electrode active material in the third negative electrode active material layer NAL3 may be in a range of $\geq$ 60:30 to $\leq$ 99:1, $\geq$ 70:30 to $\leq$ 98:2, or $\geq$ 80:20 to $\leq$ 98:2. That is, the third negative electrode active material layer NAL3 includes a given amount of the silicon-based negative electrode active material, and thus the capacity of the negative electrode may increase, and rate characteristics may be improved.

Although a smaller compressive stress PR1 is applied to the third negative electrode active material layer NAL3 compared to the compressive stress PR1 applied to the second negative electrode active material layer NAL2, the third negative electrode active material layer NAL3 is sandwiched between the structurally stabilized negative electrode current collector COL2 and the fourth negative electrode active material layer NAL4, and thus a volume change due to charging and discharging may be reduced or suppressed even when the third negative electrode active material layer NAL3 includes a given amount of silicon.

The fourth negative electrode active material layer NAL4 may include a carbon-based negative electrode active material as a negative electrode active material. The fourth negative electrode active material layer NAL4 may include a larger amount of carbon-based negative electrode active material than the third negative electrode active material layer NAL3. For example, a content of the carbon-based negative electrode active material in the fourth negative electrode active material layer NAL4 may be in a range of $\geq$ 90 wt% to $\leq$ 99 wt%, or $\geq$ 95 wt% to $\leq$ 98 wt%. The fourth negative electrode active material layer NAL4 may further include a silicon-based negative electrode active material, but a content of the silicon-based negative electrode active material in the fourth negative electrode active material layer NAL4 may be 2 wt% or less.

Located furthest from the winding center, the fourth negative electrode active material layer NAL4 experiences a smallest compressive stress PR1 while also experiencing a largest tensile stress PR2, and thus, compared to the first to third negative active material layers NAL1, NAL2, and NAL3, the fourth negative electrode active material layer NAL4 has a higher risk of cracking and delamination. The fourth negative electrode active material layer NAL4 includes, as a negative electrode active material, only a carbon-based negative electrode active material that has a small volume change and that is structurally stable, or includes a small amount of silicon-based negative electrode active material with the carbon-based negative electrode active material, and thus may lower the risk of cracking and delamination and improve lifespan of the negative electrode active material layer NAL4.

A thickness ratio of the third negative electrode active material layer NAL3 and the fourth negative electrode active material layer NAL4 may be in a range of $\geq$ 1:2 to $\leq$ 2:1. When the thickness ratio of the third negative electrode active material layer NAL3 and the fourth negative electrode active material layer NAL4 falls within the above-described range, the negative electrode may have desired or improved capacity and desired or improved lifespan characteristics.

In the negative electrode 20 for a rechargeable lithium battery, according to an example embodiment, since the silicon-based negative electrode active material is concentrated in the second negative electrode active material layer NAL2 and the third negative electrode active material layer NAL3, which are located closer to the winding center, high-rate characteristics may be improved while reducing or suppressing the expansion of the silicon-based negative electrode active material. In addition, the carbon-based negative electrode active material is concentrated in the first negative electrode active material layer NAL1 and the fourth negative electrode active material layer NAL4, which are located far from the winding center 50, the negative electrode may have improved lifespan characteristics. That is, the negative electrode 20 for a rechargeable lithium battery, according to the present disclosure, asymmetrically forms the negative electrode active material layers on both sides of the negative electrode current collector COL2, and thus rate characteristics and lifespan characteristics may be improved at the same time.

According to another example embodiment of the present disclosure, in a wound electrode assembly 40 illustrated in FIG. 8, each of a lower negative electrode active material layer INAL and an upper negative electrode active material layer ONAL includes a carbon-based negative electrode active material CM and a silicon-based negative electrode active material SM, and a content of the carbon-based negative electrode active material CM in the lower negative electrode active material layer INAL may increase closer to the first surface, and the content of a carbon-based negative electrode active material CM in the upper negative electrode active material layer ONAL may decrease closer to the second surface,

A content of the silicon-based negative electrode active material SM in the lower negative electrode active material layer INAL may decrease closer to the first surface of a negative electrode current collector COL2. A content of the silicon-based negative electrode active material SM in the upper negative electrode active material layer ONAL may increase closer to the second surface of the negative electrode current collector COL2. That is, the upper negative electrode active material layer ONAL may exhibit an opposite content profile negative electrode active material to the profile of the lower negative electrode active material layer INAL.

In the negative electrode 20 for a rechargeable lithium battery illustrated in FIG. 9, according to the present disclosure, the lower negative electrode active material layer INAL and the upper negative electrode active material layer ONAL are configured such that, closer to the winding center 50, the content of the silicon-based negative electrode active material SM increases, and thus rate characteristics may be improved while reducing or suppressing the volume expansion of the silicon-based negative electrode active material. In addition, the lower negative electrode active material layer INAL and the upper negative electrode active material layer ONAL are configured such that, farther from the winding center 50, the content of the carbon-based negative electrode active material increases, and thus lifespan characteristics of the negative electrode may be improved.

Hereinafter, the present disclosure is described through examples in more detail. However, the following examples are only for exemplifying the present disclosure, but the scope of the present disclosure is not limited to the example embodiment.

## Example

Manufacture of First negative electrode slurry:

Graphite powder was prepared as a negative electrode active material. A mixture, in which a styrene butadiene rubber (SBR) and carboxymethyl cellulose (CMC) were mixed at a weight ratio of $\geq$ 1:1, as a binder, and carbon nanotube (CNT) as a conductive material were prepared. The negative electrode active material, the binder, and the conductive material were mixed at a weight ratio of 97.5:2:0.5 to prepare a first negative electrode slurry.

Manufacture of Second negative electrode slurry:

Graphite powder as a carbon-based negative electrode active material was prepared, and silicon-carbon composite (with a silicon-to-carbon weight ratio of 6:4) as a silicon-based negative electrode active material was prepared. The graphite powder and silicon-carbon composite were mixed at a weight ratio of $\geq$ 86:14 to prepare a negative electrode active material. A mixture, in which a styrene butadiene rubber (SBR) and carboxymethyl cellulose (CMC) were mixed at a weight ratio of 1:1, as a binder, and carbon nanotube (CNT) as a conductive material were prepared. The negative electrode active material, the binder, and the conductive material were mixed at a weight ratio of 97.5:2:0.5 to prepare a second negative electrode slurry.

Manufacture of Negative electrode:

The first negative electrode slurry was coated on a bottom surface of a copper foil current collector having a thickness of $\geq$ 10 $\mu$m to form a first negative electrode active material layer. The coated electrode plate was dried at about 100 °C for about 1 hour. The second negative electrode slurry was applied onto each of the first negative electrode active material layer (formed on the bottom surface) and the top surface of the copper foil current collector to form a second negative electrode active material layer and a third negative electrode active material layer. The coated electrode plate was dried at about 100 °C for about 1 hour or more. The first negative electrode slurry was applied onto the third negative electrode active material layer (formed on the top surface) to form a fourth negative electrode active material layer. The coated electrode plate was dried and rolled to manufacture a final negative electrode.

Manufacture of Positive electrode:

A positive electrode active material ($LiNi_{0.6}Co_{0.2}Mn_{0.2}O_2$), a carbon conductive material (Super P), and a binder solution of polyvinylidene fluoride (PVDF) were added and mixed to manufacture an active material slurry. In the active material slurry, a mixed weight ratio of active material: conductive material: binder is about 98:1:1. The active material slurry was applied onto both sides (top surface, bottom surface) of an aluminum current collector having a thickness of $\geq$ 12 $\mu$m, the obtained was dried at about 120 °C for about 1 hour or more, and then rolled to manufacture a positive electrode including a lower positive electrode active material layer (formed on the bottom surface) and an upper positive electrode active material layer (formed on the upper surface). The coating was performed such that a thickness ratio of the lower positive electrode active material layer and the upper positive electrode active material layer was to be about 1:1.5.

Manufacture of Jelly-roll type electrode assembly:

A polyethylene (PE) film (manufactured by Celgard) having a thickness of $\geq 20$ $\mu$m was prepared as a first separator, and a polyethylene (PE) film (manufactured by Celgard) having a thickness of $\geq 12$ $\mu$m was prepared as a second separator. The first separator was disposed between the upper positive electrode active material layer and the second negative electrode active material layer, and the second separator was disposed on an exterior surface of the fourth negative electrode active material layer. Then, a structure, in which the obtained positive electrode, the first separator, the obtained negative electrode, and the second separator were sequentially disposed (lower positive electrode active material layer/Al/upper positive electrode active material layer/first separator/second negative electrode active material layer/first negative electrode active material layer/Cu/third negative electrode active material layer/fourth negative electrode active material layer/second separator), was wound to manufacture a jelly-roll type electrode assembly.

Manufacture of Rechargeable lithium battery:

The manufactured electrode assembly was enclosed in a cylindrical case, and an electrolyte solution in which a lithium salt of 1.3 M $LiPF_6$ was added to a solvent mixture of ethylene carbonate (EC), ethyl methyl carbonate (EMC), and dimethyl carbonate (DMC) at a volume ratio of 1:1:1 to manufacture a cylindrical rechargeable lithium battery.

## Comparative Example 1

Manufacture of Negative electrode slurry:

Graphite powder as a carbon-based negative electrode active material was prepared, and silicon-carbon composite (with a silicon-to-carbon weight ratio of 6:4) as a silicon-based negative electrode active material was prepared. The graphite powder and silicon-carbon composite were mixed at a weight ratio of $\geq 86:14$ to prepare a negative electrode active material. A mixture, as a binder, in which a styrene butadiene rubber (SBR) and carboxymethyl cellulose (CMC) were mixed at a weight ratio of $\geq 1:1$ and carbon nanotube (CNT) as a conductive material were prepared. The negative electrode active material, the binder, and the conductive material were mixed at a weight ratio of $\geq 97.5:2:0.5$ to manufacture a negative electrode slurry.

Manufacture of Negative electrode:

The manufactured negative electrode slurry was simultaneously applied onto both sides (top surface, bottom surface) of a copper foil current collector having a thickness of $\geq 10$ $\mu$m to form a first negative electrode active material layer and a second negative electrode active material layer. The coated electrode plate was dried at about 100 °C for about 1 hour or more, and rolled to manufacture a final negative electrode

Manufacture of Rechargeable lithium battery:

In the same manner as in Example, a positive electrode, a jelly-roll type electrode assembly, and a rechargeable lithium battery were manufactured.

## Comparative Example 2

Manufacture of Negative electrode slurry:

In the same manner as in Example, a first negative electrode slurry and a second negative electrode slurry were manufactured.

Manufacture of Negative electrode:

The first negative electrode slurry was applied onto both sides, in the same thickness, of the copper foil current collector having a thickness of 10 $\mu$m to form a first negative electrode active material layer and a third negative electrode active material layer. The coated electrode plate was dried at about 100 °C for about 1 hour or more. The second negative electrode slurry was applied onto the first negative electrode active material layer (formed on the bottom surface) and the third negative electrode active material layer (formed on the top surface) in the same thickness to form a second negative electrode active material layer (formed on the first negative electrode active material layer) and a fourth negative electrode active material layer (formed on the third negative electrode active material layer). The coated electrode plate was dried at about 100 °C for about 1 hour or more, and rolled to manufacture a final negative electrode

Manufacture of Rechargeable lithium battery:

In the same manner as in Example 1, a positive electrode, a jelly-roll type electrode assembly, and a rechargeable lithium battery were manufactured.

## Comparative Example 3

Manufacture of Negative electrode slurry:

In the same manner as in Example, a first negative electrode slurry and a second negative electrode slurry were manufactured.

Manufacture of Negative electrode:

The second negative electrode slurry was applied on both sides, in the same thickness, of the copper foil current collector having a thickness of 10 μm to form a first negative electrode active material layer and a third negative electrode active material layer. The coated electrode plate was dried at about 100 °C for about 1 hour or more. The first negative electrode slurry was applied onto the first negative electrode active material layer (formed on the bottom surface) and the third negative electrode active material layer (formed on the top surface) in the same thickness to form a second negative electrode active material layer (formed on the first negative electrode active material layer) and a fourth negative electrode active material layer (formed on the third negative electrode active material layer). The coated electrode plate was dried at about 100 °C for about 1 hour or more, and rolled to manufacture a final negative electrode.

Manufacture of Rechargeable lithium battery:

In the same manner as in Example 1, a positive electrode, a jelly-roll type electrode assembly, and a rechargeable lithium battery were manufactured.

## Evaluation Example 1

For the lithium batteries manufactured according to Example and Comparative Examples, lifespan characteristics were evaluated by the following methods.
The lithium batteries were charged at about 25 °C with a constant current at a current rate of 0.33 C until a voltage reaches about 4.2 V (vs. Li), and then in a constant voltage mode, cut off at a current rate of $\geq 0.05$ C while maintaining the voltage of $\geq 4.2$ V. Subsequently, during discharge, the batteries were discharged with a constant current at a rate of $\geq 1$ C until the voltage reached about 2.5 V (vs. Li) (formation cycle). The lithium battery that underwent the formation cycle was then charged at about 25 °C with a constant current at a rate of $\geq 0.5$ C until the voltage reached about 4.2 V (vs. Li). Subsequently, during discharge, the battery was discharged with a constant current at a rate of $\geq 1.4$ C until the voltage reached about 2.5 V (vs. Li), and these cycles were repeated under the same conditions up to 500th cycle (500 repetitions). In every charge and discharge cycle, a 10-minute rest period was applied after each charge/discharge cycle. Experimental results of the charge and discharge experiment at room temperature are presented in Table 1 below. Capacity retention rate at the 500th cycle is defined by Equation 1 below.

Capacity retention rate [%] = [Discharge capacity at 500th cycle / discharge capacity at 1st cycle]          Equation 1:

Table 1:

|  | Capacity retention rate [%] |
|---|---|
| Example | 89.7 |
| Comparative Example 1 | 86.5 |
| Comparative Example 2 | 84.0 |
| Comparative Example 3 | 90.4 |

## Evaluation Example 2

Characteristics of the lithium batteries manufactured according to Examples and Comparative Examples were evaluated by the following methods.

The lithium battery was charged with a constant current at a rate of $\geq 0.33$ C until a voltage reached about 4.2 V (vs. Li), and then in a constant voltage mode, was cut off at a current rate of $\geq 0.05$ C while maintaining the voltage of $\geq 4.2$ V. Subsequently, during discharge, the battery was discharged with a constant current at about 1 C rate (formation cycle). The lithium battery underwent the formation cycle was charged at about 25 °C with a constant current rate of $\geq 0.33$ C until the voltage reached about 4.2 V (vs. Li), and then, in a constant voltage mode, was cut off at a current of $\geq 0.05$ C rate while maintaining the voltage at about 4.2 V. Thereafter, discharge was performed once at each C-rate of $\geq 0.2$ C, about 0.33 C, about 0.5 C, about 1 C, about 1.5 C, about 2 C, and about 3 C (charging voltage of $\geq 4.2$ V, discharging voltage of $\geq 2.5$ V), and the discharge capacity at each C-rate was measured. Rate characteristics were evaluated according to Equation 2 below, and the evaluated results are presented in Table 2 below.

Rate characteristics [%] by C-rate = [Discharge capacity at each C-rate / discharge capacity at a rate of 0.2 C] x 100          Equation 2:

Table 2:

| | Rate characteristic (%) | | | | | | |
|---|---|---|---|---|---|---|---|
| | 0.2C | 0.33C | 0.5C | 1.0C | 1.5C | 2.0C | 3.0C |
| Example | 100.0 | 99.2 | 98.6 | 98.1 | 98.3 | 98.2 | 97.7 |
| Comparative Example 1 | 100.0 | 98.8 | 98.2 | 97.8 | 98.2 | 98.2 | 97.7 |
| Comparative Example 2 | 100.0 | 99.2 | 98.6 | 98.1 | 98.4 | 98.4 | 97.9 |
| Comparative Example 3 | 100.0 | 99.2 | 98.6 | 98.1 | 98.2 | 98.0 | 97.2 |

Referring to Table 1 and Table 2, the rechargeable lithium battery according to Example has desired or improved rate characteristics and lifespan characteristics, compared to the rechargeable lithium battery according to Comparative Example 1. The rechargeable lithium battery according to Example has desired or improved lifespan characteristics and similar level of rate characteristics compared to the rechargeable lithium battery according to Comparative Example 2, and the rechargeable lithium battery according to Example has similar level of lifespan characteristics and desired or improved rate characteristics compared to the rechargeable lithium battery according to Comparative Example 3.

The negative electrode for a rechargeable lithium battery, according to the present disclosure, includes negative electrode active material layers having an asymmetric structure on both sides of the negative electrode current collector, and thus rate characteristics and lifespan characteristics may be improved. The rechargeable lithium battery according to the present disclosure may have desired or improved rate characteristics and desired or improved lifespan characteristics.

Although the example embodiments of the present disclosure have been described with reference to attached drawings, the present disclosure may be implemented in other specific forms without changing the technical idea or essential features thereof. Therefore, it the example embodiments described above are for illustrative purposes in all respects and not limiting.

## Claims

1. A negative electrode (20) for a rechargeable lithium battery (100), the negative electrode (20) comprising:

   a negative electrode current collector (COL2);
   a lower negative electrode active material layer (INAL) on a first surface of the negative electrode current collector (COL2); and
   an upper negative electrode active material layer (ONAL) on a second surface of the negative electrode current collector (COL2),
   wherein the lower negative electrode active material layer (INAL) comprises a first negative electrode active material layer (NAL1) and a second negative electrode active material layer (NAL2) which are stacked on the first surface of the negative electrode current collector (COL2),

the upper negative electrode active material layer (ONAL) comprises a third negative electrode active material layer (NAL3) and a fourth negative electrode active material layer (NAL4) which are stacked on the second surface of the negative electrode current collector (COL2),

at least one of the first negative electrode active material layer (NAL1) and the fourth negative electrode active material layer (NAL4) comprises a carbon-based negative electrode active material,

at least one of the second negative electrode active material layer (NAL2) and the third negative electrode active material layer (NAL3) comprises a carbon-based negative electrode active material, and a silicon-based negative electrode active material,

a content of the carbon-based negative electrode active material in the first negative electrode active material layer (NAL1) is larger than a content of the carbon-based negative electrode active material in the second negative electrode active material layer (NAL2), and

a content of the carbon-based negative electrode active material in the third negative electrode active material layer (NAL3) is less than a content of the carbon-based negative electrode active material in the fourth negative electrode active material layer (NAL4).

2. The negative electrode (20) of claim 1,

wherein the content of the carbon-based negative electrode active material in the first negative electrode active material layer (NAL1) is in a range of $\geq$ 90 wt% to $\leq$ 99 wt%, and

the content of the carbon-based negative electrode active material in the fourth negative electrode active material layer (NAL4) is in a range of $\geq$ 90 wt% to $\leq$ 99 wt%.

3. The negative electrode (20) of claim 1 or 2, wherein:

a weight ratio of the carbon-based negative electrode active material and the silicon-based negative electrode active material in the second negative electrode active material layer (NAL2) is in a range of $\geq$ 80:20 to $\leq$ 98:2; and

a weight ratio of the carbon-based negative electrode active material and the silicon-based negative electrode active material in the third negative electrode active material layer (NAL3) is in a range of $\geq$ 80:20 to $\leq$ 98:2.

4. The negative electrode (20) of any of the claims 1 to 3, wherein:

at least one of the second and third negative electrode active material layer (NAL3)s further comprises a conductive material; and

the conductive material comprises a needle type carbon-based conductive material.

5. The negative electrode (20) of any of the claims 1 to 4, wherein:

the first negative electrode active material layer (NAL1) further comprises a silicon-based negative electrode active material; and

a content of the silicon-based negative electrode active material in the first negative electrode active material layer (NAL1) is in a range of $\geq$ 2 wt% or less.

6. The negative electrode (20) of any of the claims 1 to 5, wherein:

the fourth negative electrode active material layer (NAL4) further comprises a silicon-based negative electrode active material; and

a content of the silicon-based negative electrode active material in the fourth negative electrode active material layer (NAL4) is in a range of $\geq$ 2 wt% or less.

7. The negative electrode (20) of any of the claims 1 to 6, wherein:

the first negative electrode active material layer (NAL1) is in contact with the first surface of the negative electrode current collector (COL2); and

the third negative electrode active material layer (NAL3) is in contact with the second surface of the negative electrode current collector (COL2).

8. The negative electrode (20) of any of the claims 1 to 7, wherein a thickness ratio of the lower negative electrode active material layer (INAL) to the upper negative electrode active material layer (ONAL) is in a range of $\geq$ 1:2 to $\leq$ 2:1.

9. The negative electrode (20) of any of the claims 1 to 8, wherein:

a thickness ratio of the first negative electrode active material layer (NAL1) to the second negative electrode active material layer (NAL2) is in a range of $\geq$ 1:2 to $\leq$ 2:1; and
a thickness ratio of the third negative electrode active material layer (NAL3) to the fourth negative electrode active material layer (NAL4) is in a range of $\geq$ 1:2 to $\leq$ 2:1.

10. A jelly-roll type electrode assembly comprising the negative electrode (20) of claim 1,
a positive electrode (10), and a separator between the positive electrode (10) and the negative electrode (20),

wherein at least one of the lower negative electrode active material layer (INAL) and the upper negative electrode active material layer (ONAL) comprises a carbon-based negative electrode active material and a silicon-based negative electrode active material,
a content of the carbon-based negative electrode active material in the lower negative electrode active material layer (INAL) increases closer to the first surface, and
a content of the carbon-based negative electrode active material in the upper negative electrode active material layer (ONAL) decreases closer to the second surface.

11. The jelly-roll type electrode assembly of claim 10, wherein:

a content of the silicon-based negative electrode active material in the lower negative electrode active material layer (INAL) decreases closer to the first surface; and
a content of the silicon-based negative electrode active material in the upper negative electrode active material layer (ONAL) increases closer to the second surface.

12. The jelly-roll type electrode assembly of claim 10 or 11, wherein at least one of the lower negative electrode active material layer (INAL) and the upper negative electrode active material layer (ONAL) further comprises a conductive material.

13. The jelly-roll type electrode assembly of any of the claims 10 to 12, wherein a thickness ratio of the lower negative electrode active material layer (INAL) to the upper negative electrode active material layer (ONAL) is in a range of $\geq$ 1:2 to $\leq$ 2:1.

14. The jelly-roll type electrode assembly of any of the claims 10 to 13, wherein the upper negative electrode active material layer (ONAL) is spaced further apart from a winding center of the electrode assembly compared to the lower negative electrode active material layer (INAL).

15. The jelly-roll type electrode assembly of any of the claims 10 to 14, wherein:

the positive electrode (10) comprises a positive electrode current collector, a lower positive electrode active material layer on a bottom surface of the positive electrode current collector, and an upper positive electrode active material layer on a top surface of the positive electrode current collector; and
the upper positive electrode active material layer is spaced further apart from a winding center of the electrode assembly compared to the lower positive electrode active material layer.

# FIG. 1

COL1 AML1   30   COL2 AML2

10       20

ELL

Li$^+$

# FIG. 2

FIG. 3

# FIG. 4

# FIG. 5

EP 4 752 956 A1

# FIG. 6

20

# FIG. 7

EP 4 752 956 A1

FIG. 8

FIG. 9

Europäisches
Patentamt

European
Patent Office

Office européen
des brevets

## EUROPEAN SEARCH REPORT

**Application Number**

EP 25 21 9269

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/218019 A1 (TAMURA TAKAMASA [JP] ET AL) 15 July 2021 (2021-07-15)<br>* paragraphs [0029], [0038], [0043] - [0058] *<br>* figure 2 *<br>* table 1 *<br>----- | 1-15 | INV.<br>H01M4/133<br>H01M4/134<br>H01M4/1393<br>H01M4/1395<br>H01M10/04 |
| A | EP 4 270 522 A1 (PANASONIC IP MAN CO LTD [JP]) 1 November 2023 (2023-11-01)<br>* claim 1 *<br>* paragraphs [0060] - [0063] *<br>----- | 1-15 | |
| A | EP 4 102 591 A1 (CONTEMPORARY AMPEREX TECHNOLOGY CO LTD [CN] ET AL.)<br>14 December 2022 (2022-12-14)<br>* paragraphs [0084], [0085], [0133] - [0136] *<br>* figure 6 *<br>----- | 1-15 | |
| A | US 2021/234191 A1 (LEE YONG SEOK [KR] ET AL) 29 July 2021 (2021-07-29)<br>* examples 1-7 *<br>* paragraph [0045] *<br>----- | 1-15 | TECHNICAL FIELDS SEARCHED (IPC)<br><br>H01M |

The present search report has been drawn up for all claims

| Place of search | Date of completion of the search | Examiner |
|---|---|---|
| Munich | 20 March 2026 | Galbiati, Ivano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 752 956 A1**

## ANNEX TO THE EUROPEAN SEARCH REPORT
## ON EUROPEAN PATENT APPLICATION NO.

EP 25 21 9269

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | | Publication date | Patent family member(s) | | | Publication date |
|---|---|---|---|---|---|---|---|
| US 2021218019 | A1 | | 15-07-2021 | CN | 112204768 | A | 08-01-2021 |
| | | | | EP | 3813158 | A1 | 28-04-2021 |
| | | | | JP | 7386432 | B2 | 27-11-2023 |
| | | | | JP | WO2019230298 | A1 | 10-06-2021 |
| | | | | US | 2021218019 | A1 | 15-07-2021 |
| | | | | WO | 2019230298 | A1 | 05-12-2019 |
| EP 4270522 | A1 | | 01-11-2023 | CN | 116601787 | A | 15-08-2023 |
| | | | | EP | 4270522 | A1 | 01-11-2023 |
| | | | | JP | WO2022138916 | A1 | 30-06-2022 |
| | | | | US | 2024055583 | A1 | 15-02-2024 |
| | | | | WO | 2022138916 | A1 | 30-06-2022 |
| EP 4102591 | A1 | | 14-12-2022 | CN | 115516691 | A | 23-12-2022 |
| | | | | CN | 120545499 | A | 26-08-2025 |
| | | | | EP | 4102591 | A1 | 14-12-2022 |
| | | | | EP | 4471944 | A2 | 04-12-2024 |
| | | | | HU | E070435 | T2 | 28-06-2025 |
| | | | | US | 2022367921 | A1 | 17-11-2022 |
| | | | | WO | 2022222092 | A1 | 27-10-2022 |
| US 2021234191 | A1 | | 29-07-2021 | CN | 113193225 | A | 30-07-2021 |
| | | | | KR | 20210096814 | A | 06-08-2021 |
| | | | | US | 2021234191 | A1 | 29-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240174314